Europäisches Patentamt

European Patent Office

Office européen des brevets

(11) Veröffentlichungsnummer: **0 157 944**
**A2**

# (12) EUROPÄISCHE PATENTANMELDUNG

(21) Anmeldenummer: **84116239.9**

(22) Anmeldetag: **22.12.84**

(51) Int. Cl.⁴: **B 60 T 13/68**

(30) Priorität: **12.04.84 DE 3413735**

(43) Veröffentlichungstag der Anmeldung
**16.10.85 Patentblatt 85/42**

(84) Benannte Vertragsstaaten:
**DE FR GB NL SE**

(71) Anmelder **ROBERT BOSCH GMBH**
**Postfach 50**
**D-7000 Stuttgart 1(DE)**

(72) Erfinder: **Domann, Helmut, Ing.**
**Lohlenbachweg 3A**
**D-7250 Leonberg(DE)**

(72) Erfinder: **Grauel, Ingolf, Dipl.-Ing.**
**Lessingstrasse 6**
**D-7143 Vaihingen/Enz(DE)**

(72) Erfinder: **Müller, Egbert, Dr.-Ing.**
**Schillerstrasse 12**
**D-7147 Hochdorf(DE)**

(72) Erfinder: **Stumpe, Werner, Ing.**
**Goerdelerstrasse 10**
**D-7014 Kornwestheim(DE)**

(54) **Drucksteuerventil für druckmittelbetätigte Bremsanlagen.**

(57) Bei einem Drucksteuerventil für druckmittelbetätigte Bremsanlagen, insbesondere für Druckluftbremsanlagen, mit einem Proportional-Magnetventil (16, 17) und einer Steuerelektronik (19) zum Ansteuern von dessen Elektromagneten (18) ist zum Zwecke des kompakten und robusten Aufbaus der Ventilkörper mit Ventilanschlüssen, der Elektromagnet (18) und die Steuerelektronik (19) in einem einzigen Gehäuseblock (20) integriert. Die Steuerelektronik (19) ist dabei in einer Aufnahmekammer (21) im Gehäuseblock (20) angeordnet, die von einer elektrische Anschlußkontakte (24) tragenden Abdeckplatte (23) verschlossen ist.

EP 0 157 944 A2

./...

0157944

R. 19322
14.3.1984  He

– 1 –

ROBERT BOSCH GMBH, 7000 Stuttgart 1

## Drucksteuerventil für druckmittelbetätigte Bremsanlagen

### Stand der Technik

Die Erfindung geht aus von einem Drucksteuerventil für durckmittelbetätigte Bremsanlagen, insbesondere für Druckluft-Bremsanlagen, der im Oberbegriff des Anspruchs 1 angegebenen Gattung.

Bekannte Drucksteuerventile dieser Art werden elektromagnetisch über eine Steuerelektronik gesteuert, die aus ihr als elektrische Signale zugeführten Fahrzeugparametern, wie Bremsdruck, Bremssteuerdruck, Achslast, Radschlupf u.dgl., ein entsprechendes Steuersignal zur Einstellung der Größe des Erregerstroms für den Elektromagneten bildet. Die Steuerelektronik ist üblicherweise getrennt von dem Proportional-Magnetventil in einem separaten Gehäuse angeordnet und mit dem Proportional-Magnetventil und den Sensoren für die Fahrzeugparameter über elektrische Leitungen verbunden.

- 2 -

Vorteile der Erfindung

Das erfindungsgemäße Drucksteuerventil mit den kennzeichnenden Merkmalen des Anspruchs 1 hat demgegenüber den Vorteil, daß das Proportional-Magnetventil zusammen mit dem Elektromagneten und mit der notwendigen Ansteuerelektronik einen kompakten Regelblock bildet. Zum Regelblock führen nur noch wenige elektrische Leitungen, nämlich solche für die Stromversorgung und solche von und zu externen Meßwertaufnehmern, wie z.B. den Radschlupf- oder Achslastsensoren. Ein Teil der Meßwertaufnehmer, wie Drucksensoren für den Bremssteuerdruck und/oder Bremsdruck, sind vorteilhaft in den Regelblock selbst integriert. Das erfindungsgemäße Drucksteuerventil ist robust, für rauhe Betriebsweise geeignet und insbesondere wegen der wenigen externen elektrischen Anschlußleitungen wenig störanfällig. Die Mehrzahl der elektrischen Leitungen verläuft innerhalb des Regelblockes und ist damit gegen mechanische Beschädigung und Vibrationen geschützt.

Durch die in den weiteren Ansprüchen aufgeführten Maßnahmen sind vorteilhafte Weiterbildungen und Verbesserungen des erfindungsgemäßen Drucksteuerventils möglich.

Zeichnung

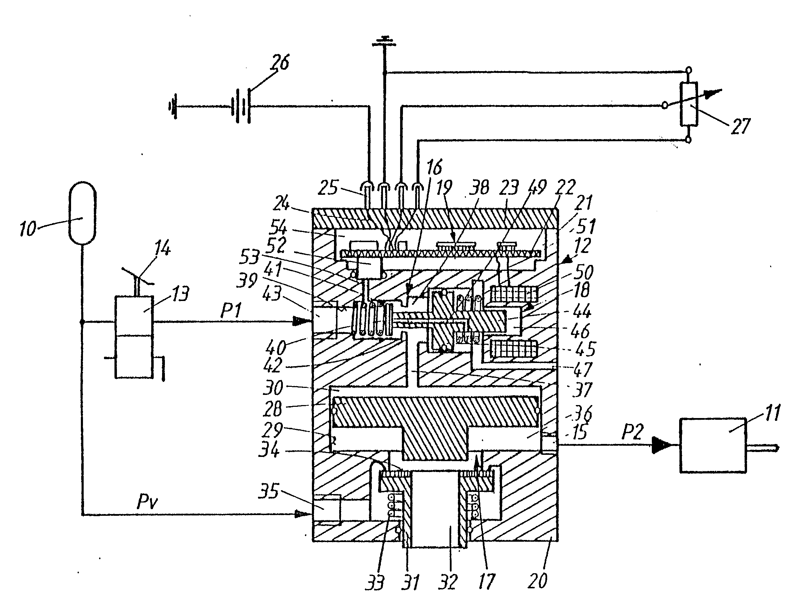

Die Erfindung ist anhand eines in der Zeichnung dargestellten Drucksteuerventils für eine Druckluft-Bremsanlage in der nachfolgenden Beschreibung näher erläutert. Dabei zeigt die Zeichnung ein Blockschaltbild einer Druckluftbremsanlage mit einem im Längsschnitt schematisch dargestellten Drucksteuerventil.

Beschreibung des Ausführungsbeispiels

Die in der Zeichnung im Blockschaltbild dargestellte Druckluftbremsanlage als Beispiel einer pneumatischen oder hydraulischen Bremsanlage, umfaßt einen Druckluft-Vorratsbehälter 10, mindestens einen Bremszylinder 11 für jeweils ein Rad des Kraftfahrzeugs und ein zwischen Druckluft-Vorratsbehälter 10 und dem Bremszylinder 11 eingeschaltetes Drucksteuerventil 12. Der Druckluft-Vorratsbehälter 10 wird ständig auf konstantem Vorratsdruck $p_V$ gehalten. Beim Bremsen wird mittels eines auf ein Betriebsbremsventil 13 einwirkenden Bremspedals 14 der Bremssteuerdruck $p_1$ erzeugt, der dem Drucksteuerventil 12 zugeführt wird. Vom Ausgang 15 des Drucksteuerventils 12 gelangt ein Ausgangsdruck $p_2$ zum Bremszylinder 11.

Das Drucksteuerventil 12 weist ein Proportional-Magnetventil auf, das von einem elektromagnetisch gesteuerten Pilotventil 16 und einem von dem Ausgangsdruck des Pilotventils 16 gesteuerten Relaisventil 17 gebildet wird. Das Pilotventil 16 arbeitet kraft- oder wegproportional, wobei die Ansteuerung des Elektromagneten 18 über eine Steuerelektronik 19 erfolgt. Die Ventilkörper von Pilotventil 16 und Relaisventil 17 werden von einem einzigen Gehäuseblock 20 gebildet, der eine von der Gehäuseblockoberfläche aus zugängliche Aufnahmekammer 21 aufweist. In der Aufnahmekammer 21 ist die Steuerelektronik 19 angeordnet, die üblicherweise auf einer Leiterplatte 22 untergebracht ist, die in der Aufnahmekammer 21 räumlich fixiert ist. Die Aufnahmekammer 21 ist von der Oberfläche des Gehäuseblocks 20 her zum Einsetzen der

0157944

19322

Leiterplatte 22 über eine Montageöffnung 54 frei zugänglich. Die Montageöffnung 54 ist von einer Abdeckplatte 23 verschlossen. Die Abdeckplatte 23 weist elektrische Anschlußkontakte 24 auf, die einerseits mit der Steuerelektronik 19 verbunden sind und andererseits als Anschlußstifte 25 von der Oberfläche der Abdeckplatte 23 abstehen. Ein Teil der Anschlußstifte 25 ermöglicht den Anschluß der Steuerelektronik 19 an die elektrische Stromversorgung, also an eine Kraftfahrzeugbatterie 26, und ein Teil der Anschlußstifte 25 dient zum Anschließen externer Meßwertaufnehmer. Ein solcher externer Meßwertaufnehmer ist ein in der Zeichnung als Potentiometer dargestellter Achslastsensor 27 zum Erfassen des Fahrzeugparameters "Achslast".

Aufbau und Funktion des Pilotventils 16 und des Relaisventils 17 sind bekannt, so daß hierauf nur kurz eingegangen wird. Das Relaisventil 17 besitzt einen Relais- oder Hilfskolben 28, der mit einer Bohrung 29 im Gehäuseblock 20 eine Steuerkammer 30 begrenzt. Der Hilfskolben 28 steuert mit einem kolbenstangenartigen Ansatz ein Ventilglied 31, wobei dieses aufgrund einer mittleren Bohrung 32 eine Entlastungsstelle für den Bremszylinder 11 bildet. Das Ventilglied 31 kann von einer Feder 33 auf einen Sitz 34 gepreßt werden, wodurch die Verbindung eines mit dem Druckluft-Vorratsbehälter 10 verbundenen Einlasses 35 und eines mit dem Bremszylinder 11 verbundenen Auslasses 36 unterbrochen wird.

Die Steuerkammer 30 des Relaisventils 17 ist über eine im Gehäuseblock 20 verlaufende Steuerbohrung 37 mit einer Auslaßkammer 38 des elektromagnetisch gesteuerten

- 5 -

Pilotventils 16 verbunden. Das in einer Bohrung 39 im Gehäuseblock 20 untergebrachte Pilotventil 16 weist ein Ventilglied 40 auf, das mittels einer Ventilschließfeder 41 gegen einen Ventilsitz 42 gepreßt wird. Das auf dem Ventilsitz 42 aufsitzende Ventilglied 40 trennt eine mit dem Betriebsbremsventil 13 verbundene Einlaßkammer 43 von der Auslaßkammer 38. Auf der der Ventilschließfeder 41 abgekehrten Seite des Ventilglieds 40 greift ein zugleich den Anker des Elektromagneten 18 bildendes Betätigungsglied 44 an. Das Betätigungsglied 44 ist zugleich als Dichtungskolben 45 ausgebildet, das die Auslaßkammer 38 von einer Entlüftungskammer 46 trennt, die über eine Entlüftungsbohrung 47 mit der Umluft in Verbindung steht. Bei Abheben des Betätigungsgliedes 44 von dem Ventilglied 40 kann über einen im Betätigungsglied 44 verlaufenden Entlüftungskanal 49 die Auslaßkammer 38 und damit die Steuerkammer 30 des Relaisventils 17 entlüftet werden. Die Erregerwicklung 50 des Elektromagneten 18 ist über elektrische Leitungen 51 mit der Steuerelektronik 19 verbunden.

Im Gehäuseblock 20 ist noch ein Meßwertaufnehmer 52 in Form eines Drucksensors angeordnet, der über einen Meßkanal 53 mit der Einlaßkammer 43 des Pilotventils 16 verbunden ist. Der Meßwertaufnehmer 52 sensiert den von dem Betriebsbremsventil 13 eingesteuerten Steuerdruck $p_1$ und wandelt diesen in ein der Steuerelektronik 19 zugeführtes elektrisches Signal als weiteren Fahrzeugparameter um. Bei einer achslastabhängigen Bremsdruckregelung (ALB-Regelung) verarbeitet die Steuerelektronik 19 in bekannter Weise das elektrische Signal des Meßwertaufnehmers 52 und das elektrische Signal des Achslastsensors 27 zu einem Steuersignal für den Elektromagneten 18, wobei der Erregerwicklung 50 ein entsprechender Er-

19322

regerstrom zugeführt wird, der bei eingesteuertem
Steuerdruck $p_1$ einen bestimmten Ausgangsdruck in
der Auslaßkammer 38 einstellt, der wiederum als
Steuerdruck für das Relaisventil 17 dient.

-.-.-.-.-.-

0157944

R. 19322
14.3.1984   He

1

ROBERT BOSCH GMBH, 7000 Stuttgart 1

Ansprüche

1.  Drucksteuerventil für druckmittelbetätigte Bremsanlagen, insbesondere für Druckluftbremsanlagen,
mit einem Proportional-Magnetventil, dessen Ventilkörper mit Ventilanschlüssen für eine Druckmittelquelle und für mindestens einen Bremszylinder und
dessen Elektromagnet in einem Gehäuseblock integriert sind, und mit einer Steuerelektronik zum
Ansteuern des Elektromagneten des Proportional-
Magnetventils insbesondere in Abhängigkeit von
Fahrzeugparametern, wie Bremsdruck, Bremssteuerdruck, Achslast, Radschlupf u.dgl., d a -
d u r c h   g e k e n n z e i c h n e t, daß die
Steuerelektronik (19) in einer Aufnahmekammer (21)
im Gehäuseblock (20) angeordnet ist, die eine von
der Gehäuseblockoberfläche her zugängliche Montageöffnung (54) aufweist, und daß die Montageöffnung
(54) von einer elektrische Anschlußkontakte (24)
tragenden Abdeckplatte (23) verschlossen ist.

0157944

19322

2. Ventil nach Anspruch 1, d a d u r c h   g e -
k e n n z e i c h n e t, daß im Gehäuseblock (20),
vorzugsweise in der Aufnahmekammer (21), Fahrzeugparameter, wie Steuerdruck, Bremsdruck, erfassende
Meßwertaufnehmer (52) angeordnet sind, die über
Druckmittelkanäle (53) im Gehäuseblock (20) mit
dem Proportional-Magnetventil (16,17) verbunden
sind.

3. Ventil nach Anspruch 1 oder 2, d a d u r c h
g e k e n n z e i c h n e t, daß die Anschlußkontakte (24) als Anschlußstifte (25) für elektrische Stromversorgung der Steuerelektronik (19)
und der Meßwertaufnehmer (27,52) und als Anschlußstifte (25) zum Anschließen externer Meßwertaufnehmer (27) ausgebildet sind.

4. Ventil nach einem der Ansprüche 1 - 3, d a -
d u r c h   g e k e n n z e i c h n e t, daß das
Proportional-Magnetventil ein elektromagnetisch
gesteuertes Pilotventil (16) und ein vom Ausgangsdruck des Pilotventils (16) gesteuertes Relaisventil (17) aufweist, die über einen Druckmittelkanal (37) im Gehäuseblock (20) miteinander in
Verbindung stehen.

-.-.-.-.-.-.-